**Europäisches Patentamt**

**European Patent Office**

**Office européen des brevets**

(19)

(11) Numéro de publication : **0 312 474 B1**

(12)

# FASCICULE DE BREVET EUROPEEN

(45) Date de publication du fascicule du brevet :
**15.04.92 Bulletin 92/16**

(51) Int. Cl.$^5$ : **B65D 83/00,** B65D 47/34,
G01F 11/02

(21) Numéro de dépôt : **88420347.2**

(22) Date de dépôt : **14.10.88**

(54) **Distributeur automatique de produits pâteux.**

(30) Priorité : **14.10.87 FR 8714734**

(43) Date de publication de la demande :
**19.04.89 Bulletin 89/16**

(45) Mention de la délivrance du brevet :
**15.04.92 Bulletin 92/16**

(84) Etats contractants désignés :
**AT BE CH DE ES FR GB GR IT LI LU NL SE**

(56) Documents cités :
**CH-A- 203 102
GB-A- 2 083 142
US-A- 2 096 397
US-A- 3 482 738**

(73) Titulaire : **SOCIETE A RESPONSABILITE
LIMITEE DITE: "S.M.T."
1 Quartier Gouilloux
F-01100 Oyonnax (FR)**

(72) Inventeur : **Perret, Jean-Luc
Três le Sentier
Marchon F-01100 Oyonnax (FR)**

(74) Mandataire : **Maureau, Philippe et al
Cabinet GERMAIN & MAUREAU BP 3011
F-69392 Lyon Cédex 03 (FR)**

Jouve, 18, rue Saint-Denis, 75001 PARIS

## Description

La présente invention concerne un distributeur automatique de doses de produits "semi-liquides", tels que savons ou graisses, ayant une forte viscosité et se présentant sous une forme pâteuse ou visqueuse.

Cette invention vise plus particulièrement les produits ayant une viscosité telle qu'ils s'écoulent difficilement même lorsque le récipient à l'intérieur duquel ils sont contenus est retourné.

Il existe actuellement, pour les savons liquides, de tels distributeurs qui sont généralement formés d'un récipient à parois rigides contenant le savon et à l'intérieur duquel plonge un tuyau d'aspiration relié à une pompe à piston, montée à l'extrémité supérieure du récipient et dont l'orifice de refoulement est relié à une buse de distribution.

L'actionnement du piston de la pompe provoque le refoulement par celle-ci d'une dose de produit dont le volume correspond au volume déplacé par le piston lors de son mouvement.

Le retour du piston de la pompe à sa position normale et l'évacuation d'une dose de produit se traduisent par une pénétration à l'intérieur de récipient d'un volume d'air égal au volume de produit évacué.

Si avec des produits liquides le niveau baisse régulièrement dans le récipient, il n'en est pas de même avec des produits pâteux, avec lesquels il se forme un cratère autour du tuyau d'aspiration, conduisant au désamorçage de la pompe, alors qu'il reste encore du produit dans le récipient.

On connaît également par le brevet US-2 096 397 (HARRIS) un distributeur de produit pâteux, du type comprenant un récipient de produit pâteux à une extrémité duquel est montée une pompe à piston, le récipient de produit pâteux étant conçu de façon que l'expulsion d'une dose de produit provoque une diminution correspondante du volume intérieur de ce récipient et la pompe étant conçue de façon à ne pas permettre le passage d'air à l'intérieur du récipient.

La pompe de ce distributeur HARRIS comporte une chambre cylindrique délimitée par la tête d'un piston et par une valve, ces deux éléments étant équipés d'un ressort de retour.

Cette chambre communique par une ouverture avec un réservoir à soufflet de produit maintenu sous pression à l'aide d'un ressort, et par un conduit normalement fermé par la valve avec un orifice de sortie de produit.

Une pression sur le piston entraîne le déplacement de la valve et la sortie de savon par l'orifice prévu à cet effet. Au retour, la valve retrouve sa position normale et le piston crée un vide partiel dans la chambre qui se remplit alors de produit.

Une telle pompe présente l'inconvénient majeur de nécessiter un ressort de retour du piston extrêmement puissant.

En effet, au moment où le ressort est le plus comprimé, c'est-à-dire où il présente la plus grande force élastique, la résistance au vide est à sa valeur minima, alors que, lors du retour du ressort, sa force diminue tandis que la résistance au vide augmente. Il est donc nécessaire de compenser cela en utilisant un ressort très puissant. Cela signifie qu'un tel distributeur ne peut être manipulé par des personnes aux capacités physiques limitées comme les enfants.

Par ailleurs, la fatigue mécanique du ressort de piston, organe essentiel du dispositif, conduit rapidement à un disfonctionnement.

De plus, si la viscosité du produit est trop importante, la chambre est susceptible de ne pas se remplir totalement d'où un dosage imprécis du produit distribué.

Pour qu'une telle pompe fonctionne correctement, il est indispensable que l'étanchéité soit parfaite. Or, il est très délicat d'aboutir à cela pour des articles qui doivent être à faible prix de revient.

Enfin, le dispositif selon le brevet US-2 096 397 doit obligatoirement être équipé d'un ressort maintenant sous pression le réservoir de produit pâteux. Cette pièce supplémentaire augmente le prix de revient du distributeur et est susceptible d'être remplacée fréquemment du fait de son usure mécanique rapide.

Le but de la présente invention est de remédier à ces inconvénients et de fournir un distributeur de produits pâteux, du type précité, qui fonctionne de façon fiable sans problème de désamorçage et qui puisse également être utilisée dans n'importe quelle position.

Ce distributeur devra également être de faible prix de revient, ne pas comporter un nombre important de pièces d'usure comme les ressorts et enfin être manipulable par quiconque.

Ce but est atteint dans le distributeur qu'elle concerne et qui est du type précité en ce que la pompe est constituée d'un corps de pompe introduit et fixé dans un embout du récipient et communiquant par une ouverture avec l'intérieur de celui-ci, d'un piston monté coulissant à l'intérieur du corps de pompe, d'une soupape montée coulissante à l'intérieur du piston, en ce que corps de pompe, le piston et la soupape délimitent une chambre dont le volume correspond à celui de la dose de produit devant être distribué, en ce que la soupape détermine avec une face du piston un premier clapet apte à ouvrir/obturer un premier passage pour le produit vers l'extérieur, en ce que la soupape détermine avec le fond du corps de pompe un second clapet apte à ouvrir/obturer un second passage pour le produit à l'intérieur du récipient vers la chambre de la pompe et en ce que le piston est sollicité par un ressort dans une position dans laquelle le premier clapet obture le premier passage et dans laquelle le second clapet ouvre le second passage, la soupape étant agencée de telle sorte que dès le début

2

du déplacement du piston de l'intérieur vers l'extérieur du corps de pompe, le second clapet ouvre le second passage.

De cette façon en n'employant qu'un seul ressort, l'expulsion d'une dose de produit ne crée à l'intérieur du récipient aucune dépression et ne peut donc provoquer l'aspiration d'air à l'intérieur de celui-ci. De plus, cette mesure est renforcée par l'étanchéité de la pompe vis-à-vis de l'air.

Selon une forme de réalisation avantageuse, le passage pour le produit vers l'extérieur est constitué par un espace annulaire ménagé entre la paroi intérieure du piston et la paroi extérieure de la soupape.

Suivant une caractéristique intéressante de l'invention, un intervalle annulaire étroit est prévu entre le piston et la soupape et cet intervalle permet l'entraînement par friction de la soupape par le piston, la soupape comportant à cet effet des parties en saillie vers l'extérieur, lors d'un déplacement de celui-ci vers le haut par l'intermédiaire du produit présent dans l'espace annulaire.

De préférence, la soupape se prolonge à son extrémité supérieure par un téton ou similaire qui traverse l'ouverture du fond du corps de pompe et qui est encliqueté dans une rondelle munie de fentes coaxiales de façon à permettre l'écoulement du produit par l'ouverture du corps de pompe.

Afin de n'opposer aucune résistance à sa diminution de volume au fur et à mesure de la distribution de doses de produits pâteux, le récipient est avantageusement réalisé en un matériau synthétique souple tel que du polypropylène.

Avantageusement aussi, le récipient a la forme d'un soufflet, ce qui favorise son aplatissement.

Dans ce cas également, le soufflet pourra présenter des plis dégressifs permettant un repli maximum des parois de celui-ci.

Dans le cas de produits de faible viscosité notamment, un ressort pourra également être prévu pour appuyer sur le fond du soufflet et garantir l'aplatissement de celui-ci au fur et à mesure de son vidage, malgré l'effet de ressort du soufflet du flacon.

De toute façon, le distributeur selon l'invention sera mieux compris et d'autres caractéristiques de celui-ci seront mises en évidence à l'aide de la description qui suit en référence au dessin schématique annexé en représentant, à titre d'exemple non limitatif, une forme de réalisation préférée :

Figure 1 en est une vue en plan avec arraché partiel,

Figures 2 à 5 sont, à échelle agrandie, des vues en coupe longitudinale de la pompe proprement dite montrant les différentes étapes de fonctionnement de celle-ci ;

Figure 6 est une vue en coupe transversale, à échelle agrandie, de la partie centrale du corps de pompe.

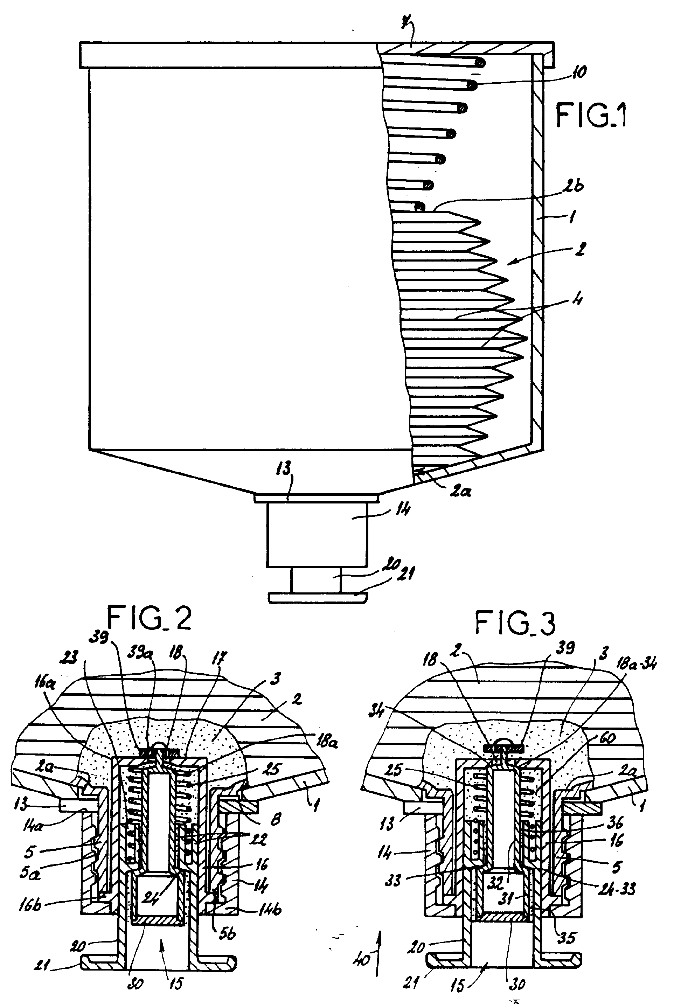

Ainsi que le montre notamment la figure 1, le distributeur selon l'invention se présente extérieurement sous la forme d'un corps **1** par exemple cylindrique, destiné à être fixé au mur par des moyens de fixation de type connu (non représentés sur le dessin), et à l'intérieur duquel est placé un récipient **2** contenant le produit pâteux **3** devant être distribué, et constituant le réservoir de celui-ci.

Le corps cylindrique **1** est fermé à son extrémité supérieure par un couvercle **7** et est muni à son extrémité inférieure d'une ouverture **8**.

Le récipient **2** a la forme d'un soufflet présentant des plis **4** dégressifs, qui confèrent à celui-ci un profil biconique, et permettent un repli maximum de la paroi du soufflet pour une expulsion complète du produit.

Ce récipient **2** présente à son extrémité inférieure **2a** un embout **5** fileté constituant le goulot de ce récipient, et permettant la fermeture de ce récipient au moyen d'un bouchon, de type courant dans le commerce, vissé sur cet embout.

Le récipient **2** peut également présenter à sa partie supérieure **2b** une poignée (non représentée sur le dessin ) destinée à en faciliter la manipulation.

Ce récipient **2** est mis en place par le haut dans le corps **1** du distributeur, après enlèvement de son couvercle **7** et un ressort **10** peut éventuellement être installé entre l'extrémité supérieure de ce récipient et le couvercle **7** du corps **1** de façon à mettre sous pression le produit contenu dans celui-ci.

Comme le montre la figure 1, le récipient **2** est mis en place à l'envers dans le corps **1**, son embout **5** étant passé à travers l'ouverture **8** de celui-ci.

La pompe **15** est mise en place à l'intérieur de l'embout **5** et obture celui-ci.

Ainsi qu'on le verra plus en détails plus loin, la pompe **15** est rendue solidaire de l'embout **5** au moyen d'une bague de serrage **14** vissée sur le filetage **5a** de celui-ci et immobilise le récipient **2** à l'intérieur du corps **1** du distributeur au moyen d'une fourchette **13** disposée entre le bord de l'ouverture **8** de celui-ci et une extrémité **14a** de la bague **14**.

La constitution de la pompe **15** est montrée plus en détails sur les figures 2 à 5.

Cette pompe **15** est constituée d'un corps de pompe **16** cylindrique de forme tubulaire et fermé à son extrémité **16a** située à l'intérieur du récipient **2** par un fond **17**.

Ce fond **17** est muni d'une ouverture **18** destinée au passage du produit pâteux **3**. Le bord de l'ouverture **18** est évidé de façon à constituer une cuvette conique **18a** destinée à servir de siège pour un clapet de la pompe **15**.

Le corps de pompe **16** est, en outre, muni à son autre extrémité d'une collerette **16b** destinée à être interposée entre l'extrémité libre **5b** de l'embout **5** et une collerette associée **14b** de la bague de serrage, ces différents éléments coopérant pour assurer l'assemblage de la pompe **15** avec le récipient **2**.

La pompe **15** comporte également un piston **20** monté coulissant à l'intérieur du corps de pompe **16**.

Ce piston **20** présente essentiellement la forme d'un tube cylindrique ouvert aux deux extrémités et muni à son extrémité inférieure d'une large bride **21**.

A son extrémité supérieure, le piston **20** comporte une double-paroi **22** cylindrique délimitant avec la paroi proprement dite du piston un logement annulaire **23** ouvert en direction de l'extérieur.

La zone de raccordement de cette double-paroi **22** avec la paroi intérieure du piston constitue un siège conique **24** pour un autre clapet de la pompe.

Le logement annulaire **23** est destiné à recevoir un ressort **25** disposé entre le fond de ce logement et le fond **17** du corps de pompe **16**. Ce ressort **25** sollicite le piston **20** de la pompe **15** vers le bas.

Enfin, la pompe **15** comporte une soupape **30** montée coulissante à l'intérieur du piston **20** de celle-ci.

Cette soupape **30** comporte deux parties cylindriques **31,32** coaxiales de diamètres différents. La partie cylindrique **31** a un diamètre compris entre le diamètre intérieur de la double-paroi **22** et le diamètre intérieur du piston **20**. Cette partie **31** est donc apte à coulisser dans la partie inférieure du piston **20** en délimitant avec la paroi intérieure de celle-ci un espace annulaire **35**.

La seconde partie **32** a un diamètre plus petit, et inférieur au diamètre intérieur de la double-paroi **22**.

Cette seconde partie **32** est donc apte à coulisser dans la partie supérieure rétrécie du piston **20** en délimitant avec la paroi intérieure de celle-ci un espace annulaire **36**.

Ces deux parties **31,32** sont reliées ensemble par une zone de raccordement de forme conique **33** destinée à coopérer avec le siège conique **24** de façon à constituer un premier clapet **24,33** ou clapet bas.

La soupape **30** est fermée à ses deux extrémités en bout et présente à son extrémité supérieure une surface conique **34** destinée à coopérer avec le siège conique **18a** du fond **17** du corps de pompe **16** de façon à constituer un second clapet **18a,34** ou clapet haut.

Cette soupape **30** se prolonge, en outre, à son extrémité supérieure par un téton **38** qui traverse l'ouverture **18** du fond **17** du corps de pompe.

Ce téton **38** est munie d'une tête **38a** et est encliqueté dans une rondelle **39** disposée de l'autre côté du fond **17**.

L'ensemble rondelle **39**-téton **38** assure la liaison de la soupape **30** avec le corps de pompe **16** et, par conséquent, la liaison des différentes parties **16,20** et **30** de cette pompe par l'intermédiaire des parties **24,33** de celles-ci.

La rondelle **39** est munie de fentes axiales **39a** de façon à permettre l'écoulement du produit **3** par l'ouverture **18** du corps de pompe **16**.

Le téton **38** de la soupape **30** pourrait être remplacé par une vis passée dans la rondelle **39** et vissée dans le fond de la soupape **30**, ou par une rondelle clipsable engagée dans le fond.

L'amorçage de la pompe **15** ainsi décrite s'effectue automatiquement avec la mise sous pression du récipient **2** à l'aide du ressort **10** ou simplement par gravité.

La chambre annulaire **60** de la pompe délimitée par le corps **16** de celle-ci, la soupape **30** et l'extrémité supérieure du piston **20** se remplissent donc de produit **3**. On notera que dans la position de repos, le piston **20** est dans sa position la plus basse en butée contre le siège **33** de la soupape **30**, elle-même retenue dans sa position basse par la rondelle **39** en butée contre le fond du corps de pompe **16**.

La chambre annulaire **60** est, dans ce cas, fermée vers le bas par la fermeture du clapet bas **24,33** et le produit ne peut donc s'écouler vers l'extérieur.

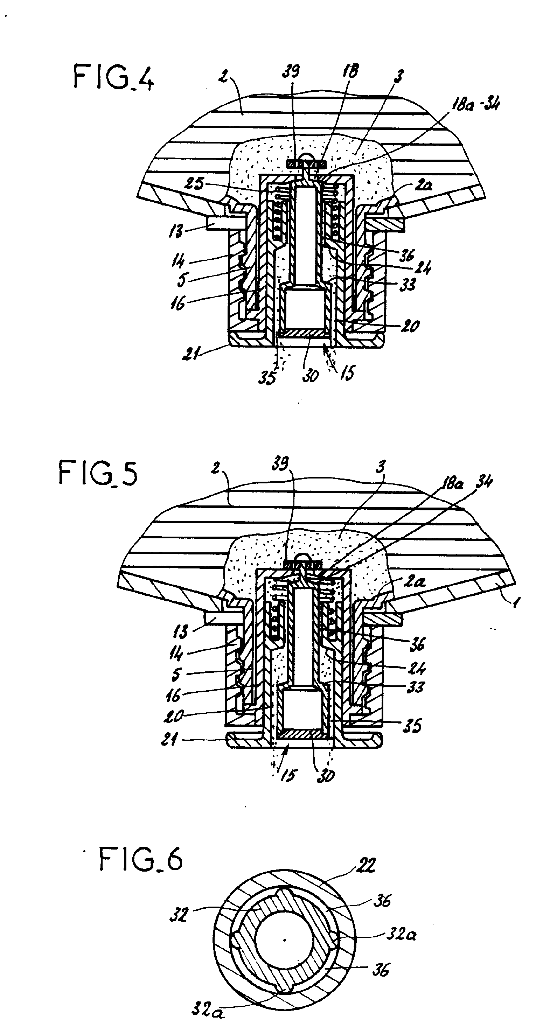

Lorsqu'une dose de produit **3** est désirée, il suffit d'exercer sur la bride **21** du piston **20** une poussée vers le haut, c'est-à-dire dans le sens de la flèche **40**, dans la figure 3.

Sous l'effet de cette poussée, le piston **20** se déplace vers le haut et entraîne avec lui dans ce déplacement la soupape **30**.

On notera que cet entraînement s'effectue par friction par l'intermédiaire de parties en saillie telles que des nervures **32a** faisant saillie de la périphérie de la partie cylindrique **32** de la soupape **30**, comme montré à la figure 6.

La soupape **30** est ainsi déplacée vers le haut jusqu'à ce que sa partie **34** vienne buter contre le siège **18a** en fermant ainsi le clapet haut **18a,34** (Cf. Figure 3) et empêchant le refoulement de produit **3** dans le récipient **2**.

Le piston **20** poursuit son déplacement vers le haut, en comprimant le ressort **25** et en réduisant le volume de la chambre **60** de la pompe, jusqu'à ce que sa bride **21** vienne buter contre l'extrémité inférieure de la bague de serrage **14** (Cf. figure 4).

Au cours de ce déplacement, la partie **24** du piston se décolle du siège **33** de la soupape **30** et le second clapet bas **24,33** s'ouvre. La chambre **60** se vide et le produit **3** contenue dans celle-ci peut alors s'évacuer vers le bas (Cf. Figure 4) par les deux passages annulaires **35** et **36** ménagés entre la soupape **30** et le piston **20**. La quantité de produit **3** évacuée correspond à la diminution de volume de la chambre **60** et correspond à la dose de produit que l'on désire délivrer.

Une fois le piston **20** arrivé en butée contre la bague **14**, il est relâché et peut revenir à sa position initiale sous l'effet du ressort **25** (Cf. Figure 5).

Au cours de ce mouvement, le piston **20** entraîne avec lui, par friction, la soupape **30** par l'intermédiaire des nervures **32a** contenues dans l'espace annulaire **36**, jusqu'à ce que cette soupape **30** soit arrêtée par la rondelle **39**. Dès le début de ce mouvement, le clapet haut **18a,33** ouvre le passage **18**.

La chambre **60** commence alors à se remplir par les ouvertures **39a** de la rondelle **39**, tandis que le piston **20** poursuit sa descente jusqu'à venir, dans le position montrée à la figure 2 c'est-à-dire en butée contre la partie **34** de la soupape **30** en fermant le clapet bas **24,33**.

A ce moment, la chambre **60** de la pompe est pleine et le dispositif est prêt pour la distribution d'une autre dose.

On remarquera que le système de pompage selon l'invention fonctionne sans faire appel à l'air extérieur et que, par ailleurs, celui-ci ne peut absolument pas pénétrer à l'intérieur du dispositif, les seuls passages **35,36** prévus pour l'écoulement du produit **3** étant très étroits et étant obturés par le produit lui-même, qui, du fait de sa forte viscosité, empêche la pénétration de l'air à l'intérieur du dispositif.

De ce fait, le dispositif selon l'invention peut fonctionner dans n'importe quelle position, c'est-à-dire aussi bien à l'envers qu'a l'endroit.

On notera également que le ressort **10** n'est pas indispensable et peut fort bien être supprimé, l'aspiration créée par la pompe **15** étant suffisante pour la distribution du produit

**Revendications**

1. Distributeur automatique de produits pâteux (3), du type comprenant un récipient (2) de produit pâteux à une extrémité duquel est montée une pompe (15) à piston, le récipient (2) de produit pâteux étant conçu de façon que l'expulsion d'une dose de produit (3) provoque une diminution correspondante du volume intérieur de ce récipient (2) et la pompe (15) étant conçue de façon à ne pas permettre le passage d'air à l'intérieur du récipient (2), caractérisé en ce que la pompe (15) est constituée d'un corps de pompe (16) introduit et fixé dans un embout (5) du récipient (2) et communiquant par une ouverture (18) avec l'intérieur de celui-ci, d'un piston (20) monté coulissant à l'intérieur du corps de pompe (16), d'une soupape (30) montée coulissante à l'intérieur du piston (20), en ce que le corps de pompe (16), le piston (20) et la soupape (30) délimitent une chambre (60) dont le volume correspond à celui de la dose de produit (3) devant être distribué, en ce que la soupape (30) détermine avec une face (24) du piston (20) un premier clapet (24,33) apte à ouvrir/obturer un passage (35) pour le produit (3) vers l'extérieur, en ce que la soupape (30) détermine avec le fond (17) du corps de la pompe (16) un second clapet (18a,34) apte à ouvrir/obturer un passage (18) pour le produit (3) à l'intérieur du récipient (2) vers la chambre (60) de la pompe et en ce qu'un ressort (25), dont une des extrémités est en appui contre le fond du corps de pompe (16) et dont l'autre extrémité est engagée dans un logement annulaire que comprend le piston (20), sollicite le piston (20) dans une position dans laquelle le premier clapet (24,33) obture le passage (35) et dans laquelle le second clapet (18a,34) ouvre le passage (18), la soupape (30) étant agencée, d'une part, de telle sorte que dès le début du déplacement du piston (20) de l'extérieur vers l'intérieur du corps de la pompe (16), elle soit déplacée dans le même sens que le piston (20), du fait de forces de friction existant entre elle et le piston (20), jusqu'à fermer le second clapet (18a,34), le piston (20), poursuivant son déplacement, permettant alors de vider la chambre (60), et, d'autre part, de telle sorte que dès le début du déplacement du piston (20) de l'intérieur vers l'extérieur du corps de pompe (16), la soupape (30) soit déplacée dans le même sens que le piston (20) sous l'effet desdites forces de friction de manière à ce que le second clapet (18a,34) ouvre le passage (18).

2. Distributeur selon la revendication 1, caractérisé en ce que le passage (35) est constitué par un espace annulaire ménagé entre la paroi intérieure du piston (20) et la paroi extérieure de la soupape (30).

3. Distributeur selon les revendications 1 ou 2, caractérisé en ce qu'un intervalle annulaire étroit (36) est prévu entre le piston (20) et la soupape (30) et en ce que cet intervalle (36) permet l'entraînement par friction de la soupape (30) par le piston (20), la soupape (30) comportant à cet effet des parties (32a) en saillie vers l'extérieur, lors d'un déplacement de celui-ci vers le haut par l'intermédiaire du produit (3) présent dans l'espace annulaire (36).

4. Distributeur selon les revendications 1 à 3, caractérisé en ce que la soupape (30) se prolonge à son extrémité supérieure par un têton (38) ou similaire qui traverse l'ouverture (18) du fond (17) du corps de pompe (16) et qui est encliqueté dans une rondelle (39).

5. Distributeur selon la revendication 4, caractérisé en ce que la rondelle (39) est munie de fentes coaxiales (39a) de façon à permettre l'écoulement du produit (3) par l'ouverture (18) du corps de pompe (16).

6. Distributeur automatique selon l'une quelconque des revendications 1 à 5, caractérisé en ce que le récipient (2) est réalisé en un matériau synthétique souple tel que du polypropylène.

7. Distributeur selon l'une quelconque des revendications 1 à 6, caractérisé en ce que le récipient (2) a la forme d'un soufflet.

8. Distributeur selon la revendication 7, caractérisé en ce que le soufflet (2) présente des plis (4) dégressifs.

9. Distributeur selon l'une quelconque des revendications 1 à 8, caractérisé en ce que le récipient (2) est monté à l'intérieur d'un corps (1) de distributeur et en ce que ce récipient (2) est mis en pression par un ressort (10) monté entre le fond du corps (1) et ce récipient (2).

**Patentansprüche**

1. Automatischer Spender für pastöse Massen (3), mit einem Behälter (2) für die pastöse Masse, an dessen einem Ende eine Kolbenpumpe (15) angebracht ist, wobei der Behälter (2) für die pastöse Masse derart ausgebildet ist, daß das Austreiben einer Dosis der Masse (3) eine entsprechende Verkleinerung des inneren Volumens dieses Behälters (2) hervorruft, und die Pumpe (15) derart ausgebildet ist, daß sie den Durchtritt von Luft ins Innere des Behälters (2) verhindert, dadurch gekennzeichnet, daß die Pumpe (15) von einem Pumpenkörper (16), der in einen Ansatz (5) des Behälters (2) eingeführt und in diesem festgelegt ist und über eine Öffnung (18) mit dem Behälterinneren verbunden ist, einem im Inneren des Pumpenkörpers (16) verschiebbar angeordneten Kolben (20) und einem im Inneren des Kolbens (20) verschiebbar angeordneten Ventil (30) gebildet wird, daß der Pumpenkörper (16), der Kolben (20) und das Ventil (30) eine Kammer (60) begrenzen, deren Volumen dem Volumen der Dosis der Masse (3) vor der Ausgabe entspricht, daß das Ventil (30) mit einer Fläche (24) des Kolbens (20) ein erstes Verschlußteil (24, 33) zum Öffnen/Verschließen eines Durchgangs (35) für die Masse (3) nach außen bildet, daß das Ventil (30) mit dem Boden (17) des Ventilkörpers (16) ein zweites Verschlußteil (18a, 34) zum Öffnen/Verschließen eines Durchgangs (18) für die Masse (3) vom Inneren des Behälters (2) zur Pumpenkammer (60) bildet und daß eine Feder (25), deren eines Ende gegen den Boden des Pumpenkörpers (16) abgestützt ist und deren anderes Ende in eine den Kolben (20) aufnehmende ringförmige Aufnahme eingreift, den Kolben (20) in einer Stellung beaufschlagt, in der das erste Verschlußteil (24, 33) den Durchgang (35) verschließt und in der das zweite Verschlußteil (18a, 34) den Durchgang (18) öffnet, wobei das Ventil (30) derart ausgebildet ist, daß es zum einen mit Beginn des Verschiebens des Kolbens (20) von außen ins Innere des Pumpenkörpers (16) aufgrund von zwischen ihm und dem Kolben (20) auftretenden Reibungskräften gleichsinnig wie der Kolben (20) bis zum Verschließen des zweiten Verschlußteiles (18a, 34) verlagert wird, wonach der seine Bewegung fortsetzende Kolben (20) das Entleeren der Kammer (60) ermöglicht, und zum anderen mit Beginn des Verschiebens des Kolbens (20) von innen nach außerhalb des Pumpengehäuses (16) unter der Wirkung der genannten Reibungskräfte gleichsinnig wie der Kolben (20) derart verlagert wird, daß das zweite Verschlußteil (18a, 34) den Durchgang (18) öffnet.

2. Spender nach Anspruch 1, dadurch gekennzeichnet, daß der Durchgang (35) von einem Ringraum gebildet wird, der zwischen der Innenwand des Kolbens (20) und der Außenwand des Ventils (30) vorhanden ist.

3. Spender nach Anspruch 1 oder 2, dadurch gekennzeichnet, daß zwischen dem Kolben (20) und dem Ventil (30) ein schmaler ringförmiger Zwischenraum (36) vorgesehen ist und daß dieser Zwischenraum (36) die Reibungsmitnahme des Ventils (30) durch den Kolben (20) bei einer Kolbenbewegung nach oben durch die dazwischen befindliche, im ringförmigen Raum (36) vorhandene Masse (3) gestattet, wobei das Ventil (30) zu diesem Zwecke nach außen vorstehende Partien (32a) aufweist.

4. Spender gemäß den Ansprüchen 1 bis 3, dadurch gekennzeichnet, daß das Ventil (30) an seinem oberen Ende durch ein Ansatzstück (38) od. dgl. verlängert ist, das die Öffnung (18) des Bodens (17) des Pumpenkörpers (16) durchdringt und mit einer Sicherungsscheibe (39) verrastet ist.

5. Spender nach Anspruch 4, dadurch gekennzeichnet, daß die Sicherungsscheibe (39) mit koaxialen Durchbrechungen (39a) versehen ist, so daß die Masse (3) durch die Öffnung (18) des Pumpenkörpers (16) ausfließen kann.

6. Automatischer Spender nach einem der Ansprüche 1 bis 5, dadurch gekennzeichnet, daß der Behälter (2) aus nachgiebigem Kunststoffmaterial wie Polypropylen besteht.

7. Spender nach einem der Ansprüche 1 bis 6, dadurch gekennzeichnet, daß der Behälter die Gestalt eines Balges aufweist.

8. Spender nach Anspruch 7, dadurch gekennzeichnet, daß der Balg (2) degressive Falten (4) aufweist.

9. Spender nach einem der Ansprüche 1 bis 8, dadurch gekennzeichnet, daß der Behälter (2) im Inneren eines Körpers (1) des Spenders montiert ist und daß der Behälter (2) durch eine zwischen dem Boden des Körpers (1) und diesem Behälter (2) angeordnete Feder (10) unter Druck gesetzt ist.

**Claims**

1. Automatic dispenser for viscous products (3), of the type comprising a receptacle (2) for the viscous product at one end of which is mounted a piston pump (15), the receptacle (2) for the viscous product being designed so that the expulsion of a dose of product (3) brings about a corresponding decrease in the internal volume of this receptacle (2) and the pump (15) being designed so as to not allow the passage of air inside the receptacle (2), characterised in that the pump (15) consists of a pump body (16) inserted and fixed in a connecting piece (5) on the receptacle (2) and communicating with the interior of the latter through an opening (18), a piston (20) mounted slidingly inside the pump body (16), and a valve (30) mounted slidingly inside the piston (20), in that the pump body (16), the piston (20) and the valve (30) define a chamber (60) whose volume corresponds to that of the dose of product (3) which has to be dispensed, in that the valve (30) determines, with a face (24) of the piston (20), a first shut-off (24, 33) suitable for opening/closing a passage (35) for the product (3) to the outside, in that the valve (30) determines, with the end (17) of the pump body (16), a second shut-off (18a, 34) suitable for opening/closing a passage (18) for the product (3) inside the receptacle (2) to the chamber (60) of the pump and in that a spring (25), one end of which bears against the end of the pump body (16) and the other end of which is engaged in an annular recess included in the piston (20), pushes the piston (20) into the position in which the first shut-off (24, 33) closes off the passage (35) and in which the second shut-off (18a, 34) opens the passage (18), the valve (30) being arranged on the one hand so that, as soon as the piston (20) starts to move from the outside towards the inside of the pump body (16), it is moved in the same direction as the piston (20), because of friction forces existing between it and the piston (20), until the second shut-off (18a, 34) is closed, the piston (20), continuing its movement, then making it possible to empty the chamber (60), and on the other hand so that, as soon as the piston (20) starts to move from the inside towards the outside of the pump body (16), the valve (30) is moved in the same direction as the piston (20) under the effect of the said friction forces so that the second shut-off (18a, 34) opens the passage (18).

2. Dispenser according to claim 1, characterised in that the passage (35) consists of an annular space provided between the internal wall of the piston (20) and the external wall of the valve (30).

3. Dispenser according to claims 1 or 2, characterised in that a narrow annular gap (36) is provided between the piston (20) and the valve (30) and in that this gap (36) enables the valve (30) to be driven by the piston (20) by friction, the valve (30) having to this end parts (32a) projecting towards the outside, when the piston is moved upwards by means of the product (3) present in the annular space (36).

4. Dispenser according to claims 1 to 3, characterised in that the valve (30) is extended at its top end by a stud (38) or similar which passes through the opening (18) in the end (17) of the pump body (16) and which is snapped into a washer (39).

5. Dispenser according to claim 4, characterised in that the washer (39) is provided with coaxial slots (39a) so as to permit the flow of the product (3) through the opening (18) in the pump body (16).

6. Automatic dispenser according to any one of claims 1 to 5, characterised in that the receptacle (2) is produced from a flexible synthetic material such as polypropylene.

7. Dispenser according to any one of claims 1 to 6, characterised in that the receptacle (2) is in the form of a bellows.

8. Dispenser according to claim 7, characterised in that the bellows (2) has decreasing folds (4).

9. Dispenser according to any one of claims 1 to 8, characterised in that the receptacle (2) is mounted inside a dispenser body (1) and in that this receptacle (2) is put under pressure by a spring (10) mouted between the end of the body (1) and this receptacle (2).

FIG.1

FIG_2

FIG_3

EP 0 312 474 B1

FIG.4

FIG.5

FIG.6

9